# EUROPEAN PATENT APPLICATION

(11) **EP 4 831 029 A1**
(43) Date of publication of application: **28.10.2026**
(21) Application number: 26174539.2
(22) Date of filing: 24.04.2026
(51) Int. Cl.: B60W 30/182, B60W 10/04, B60W 10/10, B60W 10/22, B60W 50/00

(54) **CONTROL SYSTEM AND METHOD FOR A VEHICLE**

(30) Priority: 24.04.2025 GB 202506106
(71) Applicant: Jaguar Land Rover Limited, Coventry, Warwickshire CV3 4LF (GB)
(72) Inventor: Silk, James, Coventry, CV3 4LF (GB); Frampton, Thomas, Coventry, CV3 4LF (GB); Walker, Stuart, Coventry, CV3 4LF (GB); Coleman, James, Coventry, CV3 4LF (GB); Barlow, Ian, Coventry, CV3 4LF (GB)
(74) Representative: Jaguar Land Rover Patents Department

(57) **Abstract**

Aspects of the present invention relate to a control system (1) for selecting one of a plurality of subsystem control modes (170(n)) for a vehicle (5). The plurality of subsystem control modes (170(n)) each control at least one vehicle subsystem (3(n)). The plurality of subsystem control modes (170(n)) comprise a first subsystem control mode (170(1)) for configuring the at least one vehicle subsystem (3(n)) for operation on-road and a second subsystem control mode (170(2)) for configuring the at least one vehicle subsystem (3(n)) for operation off-road. The control system (1) include one or more processor (120) collectively configured to receive a driver assistance signal (260) from a driver assistance system (200), the driver assistance signal (260) indicating detection of one or more object of interest (19(n)) external to the vehicle (5); and determine a first mode selection probability (31(1)) in dependence on the detection of the one or more object of interest (19(n)), the first mode selection probability indicating a likelihood that the vehicle (5) is operating on-road. One of the first and second subsystem control modes (170(1), 170(2)) is selected in dependence on the first mode selection probability (31(1)). Aspects of the present invention also relate to a vehicle (5) and a method (400).

## Description

### TECHNICAL FIELD

The present disclosure relates to a control system and method for a vehicle. More particularly, the present disclosure relates to a control system and method for selecting a subsystem control mode for a vehicle. Aspects of the invention relate to a control system, a vehicle, a method and computer readable instructions.

### BACKGROUND

It is known to provide a control system for controlling operation of one or more vehicle subsystems provided on a vehicle. A plurality of subsystem control modes may be defined for controlling operation of the vehicle subsystems. The subsystem control modes may be associated with particular operating conditions or terrain types. The subsystem control mode is selected in dependence on terrain indicator parameters which provide an indication of the type or class of terrain. The selected subsystem control mode should change to reflect variations in the terrain type. This can help to maintain the vehicle in an appropriate configuration for the prevailing terrain type.

It is an aim of the present invention to address one or more of the disadvantages associated with the prior art.

### SUMMARY OF THE INVENTION

Aspects and embodiments of the invention provide a control system, a vehicle, a method and computer readable instructions as claimed in the appended claims.

According to an aspect of the present invention there is provided a control system for selecting one of a plurality of subsystem control modes for a vehicle, each of the plurality of subsystem control modes controlling at least one vehicle subsystem, wherein the plurality of subsystem control modes comprise a first subsystem control mode for configuring the at least one vehicle subsystem for operation on-road and a second subsystem control mode for configuring the at least one vehicle subsystem for operation off-road; the control system comprising one or more processor collectively configured to:
receive a driver assistance signal from a driver assistance system, the driver assistance signal indicating detection of one or more object of interest external to the vehicle;
determine a first mode selection probability in dependence on the detection of the one or more object of interest, the first mode selection probability indicating a likelihood that the vehicle is operating on-road; and
select one of the first and second subsystem control modes in dependence on the first mode selection probability. The control system utilises the driver assistance system to determine a likelihood that the vehicle is operating on-road. Conversely, the first mode selection probability may provide an indication that the vehicle is operating off-road. At least in certain embodiments, the driver assistance system provides an indication of the terrain type on which the vehicle is operating. The subsystem control mode may be selected in dependence on the determined terrain type.

The control system comprises one or more controllers collectively comprising at least one electronic processor having an electrical input for receiving an input signal; and at least one memory device electrically coupled to the at least one electronic processor and having instructions stored therein. The at least one electronic processor may be configured to access the at least one memory device and execute the instructions thereon so as to receive the driver assistance signal from the driver assistance system; and determine the first mode selection probability in dependence on the detection of the one or more object of interest. The at least one electronic processor may be configured to select one of the first and second subsystem control modes in dependence on the first mode selection probability.

The at least one electronic processor may be configured to determine a second mode selection probability in dependence on the detection of the one or more object of interest, the second mode selection probability indicating a likelihood that the vehicle is operating off-road. The at least one electronic processor may be configured to select one of the first and second subsystem control modes in dependence on the first mode selection probability and the second mode selection probability.

The one or more processor is collectively configured to determine a second mode selection probability in dependence on the detection of the one or more object of interest, the second mode selection probability indicating a likelihood that the vehicle is operating off-road. The one or more processor may select one of the first and second subsystem control modes in dependence on the first mode selection probability and the second mode selection probability. The at least one electronic processor may be configured to determine the second mode selection probability in dependence on the detection of the one or more object of interest. The one or more controllers may be configured to select one of the first and second subsystem control modes in dependence on the first mode selection probability.

At least one of the first mode selection probability and the second mode selection probability may be determined in dependence on an object detection parameter associated with the one or more object of interest. Different object detection parameters may be used to determine the first mode selection probability and the second mode selection probability. The object detection parameter may comprise a detection rate (or a detection frequency) of the object of interest. Alternatively, or in addition, the object detection parameter may comprise a moving average of the detection of the object of interest. Alternatively, or in addition, the object detection parameter may comprise a distance travelled or a time elapsed since the most recent detection of the object of interest.

The one or more processor may be configured to determine the object detection parameter with respect to a distance travelled by the vehicle. The one or more processor may monitor a distance travelled by the vehicle. Alternatively, the one or more processor may be configured to determine the determine the object detection parameter with respect to time.

The driver assistance signal may comprise at least one classification label indicating a class of the or each detected object of interest. The one or more processor may be configured collectively to determine the first and second mode selection probabilities in dependence on the class of the or each object of interest. The classification label may, for example, classify the one or more object of interest as one or more of the following:
a pedestrian;
a cyclist;
a vehicle;
a lane line marking;
a sign or street furniture; and
a road sign;

One or more of the above classifications may be omitted. Further classifications may be applied, for example to differentiate between vehicle types.

The one or more processor may be configured collectively to:
select at least one probability map in dependence on the class of the or each detected object of interest.
calculate the first mode selection probability and/or the second mode selection probability in dependence on the at least one selected probability map.

At least in certain embodiments at least one of the first mode selection probability and the second mode selection probability is determined in dependence on an object detection parameter associated with the one or more object of interest. The one or more processor may be configured collectively to traverse the at least one selected probability map in dependence on the object detection parameter of the one or more object of interest.

The one or more processor may be configured collectively to select a first probability map in dependence on a determination that the one or more object of interest belongs to a first class. A first probability component may be calculated in dependence on the selected first probability map. The first mode selection probability may be determined in dependence on the first probability component.

The one or more processor may be configured collectively to select a second probability map in dependence on a determination that the one or more object of interest belongs to a second class. A second probability component may be calculated in dependence on the selected second probability map. The first mode selection probability may be determined in dependence on the second probability component.

The first mode selection probability may be determined in dependence on the first and second probability components. At least in certain embodiments the first mode selection probability may be determined in dependence on the first and second probability maps.

According to a further aspect of the present invention there is provided a system for controlling operation of a vehicle, the system comprising a control system as claimed in any one of the preceding claims and an advanced driver assistance system (ADAS) for detecting the one or more object of interest.

According to a further aspect of the present invention there is provided a vehicle comprising a control system as described herein; or a system as described herein.

According to a further aspect of the present invention there is provided a method of selecting one of a plurality of subsystem control modes for a vehicle, each of the plurality of subsystem control modes controlling at least one vehicle subsystem, wherein the plurality of subsystem control modes comprise a first subsystem control mode for configuring the at least one vehicle subsystem for operation on-road and a second subsystem control mode for configuring the at least one vehicle subsystem for operation off-road; the method comprising:
detecting one or more object of interest external to the vehicle;
determine a first mode selection probability in dependence on the detection of the one or more object of interest, the first mode selection probability indicating a likelihood that the vehicle is operating on-road; and
select one of the first and second subsystem control modes in dependence on the first mode selection probability.

The method may comprise determining a second mode selection probability in dependence on the detection of the one or more object of interest, the second mode selection probability indicating a likelihood that the vehicle is operating off-road. One of the first and second subsystem control modes may be selected in dependence on the first mode selection probability and the second mode selection probability.

According to a further aspect of the present invention there is provided computer readable instructions which, when executed by one or more processors, cause the one or more processors to perform the method(s) described herein.

According to a further aspect of the present invention there is provided a control system for selecting one of a plurality of subsystem control modes for a vehicle, each of the plurality of subsystem control modes controlling at least one vehicle subsystem, wherein the plurality of subsystem control modes comprise a first subsystem control mode for configuring the at least one vehicle subsystem for operation on-road and a second subsystem control mode for configuring the at least one vehicle subsystem for operation off-road; the control system comprising one or more processor collectively configured to:
detect one or more object of interest external to the vehicle;
determine a first mode selection probability in dependence on the detection of the one or more object of interest, the first mode selection probability indicating a likelihood that the vehicle is operating on-road; and
select one of the first subsystem control mode and the second subsystem control mode in dependence on the first mode selection probability.

The one or more processor collectively configured to determine a second mode selection probability in dependence on the detection of the one or more object of interest, the second mode selection probability indicating a likelihood that the vehicle is operating off-road. One of the first subsystem control mode and the second subsystem control mode may be selected in dependence on the first and second mode selection probabilities.

The one or more processor may be configured to classify the one or more object of interest as belonging to one of a plurality of classes.

According to a further aspect of the present invention there is provided a control system for selecting one of a plurality of subsystem control modes for a vehicle, each of the plurality of subsystem control modes controlling at least one vehicle subsystem, wherein the plurality of subsystem control modes comprise a first subsystem control mode for configuring the at least one vehicle subsystem for operation on-road and a second subsystem control mode for configuring the at least one vehicle subsystem for operation off-road; the control system comprising one or more processor collectively configured to:
receive a driver assistance signal from a driver assistance system, the driver assistance signal indicating detection of one or more object of interest external to the vehicle;
determine at least one of a first mode selection probability and a second mode selection probability in dependence on the detection of the one or more object of interest, wherein the first mode selection probability indicates a likelihood that the vehicle is operating on-road and the second mode selection probability indicates a likelihood that the vehicle is operating off-road; and
select one of the first and second subsystem control modes in dependence on the at least one of the first mode selection probability and the second mode selection probability.

At least in certain embodiments, there is a relationship between the probability that the vehicle is operating on-road and operating off-road. For example, the first and second mode selection probabilities may be complementary. Thus, the probability that the vehicle is operating on-road may be used to determine the probability that the vehicle is operating off-road.

According to an aspect of the present invention there is provided a control system for selecting one of a plurality of subsystem control modes for a vehicle, each of the plurality of subsystem control modes controlling at least one vehicle subsystem, wherein the plurality of subsystem control modes comprise a first subsystem control mode for configuring the at least one vehicle subsystem for operation on-road and a second subsystem control mode for configuring the at least one vehicle subsystem for operation off-road; the control system comprising one or more processor collectively configured to:
receive a driver assistance signal from a driver assistance system, the driver assistance signal indicating detection of one or more object of interest external to the vehicle;
determine a first mode selection probability in dependence on the detection of the one or more object of interest, the first mode selection probability indicating a likelihood that the vehicle is operating off-road; and
select one of the first and second subsystem control modes in dependence on the first mode selection probability.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle comprising a control system in accordance with an embodiment of the present invention;
Figure 2 shows a schematic representation of the vehicle shown in Figure 1;
Figure 3 is a schematic representation of the control system provided on the vehicle in accordance with an embodiment of the present invention;
Figure 4 shows a schematic representation of a field of view of the imaging sensor provided on the vehicle shown in Figures 1 and 2;
Figures 5A and 5B show illustrative images captured by the imaging sensor shown in Figure 3;
Figure 6 is a schematic representation of an advanced driver assistance system for use in conjunction with the control system according to an embodiment of the present invention;
Figures 7A to 7E illustrate probability maps for determining a probability component for each object of interest in dependence on a determined class; and
Figure 8 is a flow chart illustrating a method in accordance with an embodiment of the present invention.

### DETAILED DESCRIPTION

A control system 1 and a method 400 for controlling operation of at least one vehicle subsystem 3(n) of a vehicle 5 in accordance with an embodiment of the present invention is described herein with reference to the accompanying Figures. As described herein, the control system 1 comprises a vehicle control unit 7 for controlling operation of the at least one vehicle subsystem 3(n). The control system 1 according to the present embodiment is configured to control the at least one vehicle subsystem 3(n) in dependence on an output from an advanced driver assistance system (ADAS) 200. The control system 1 and the ADAS 200 may be conbined to form a system 300.

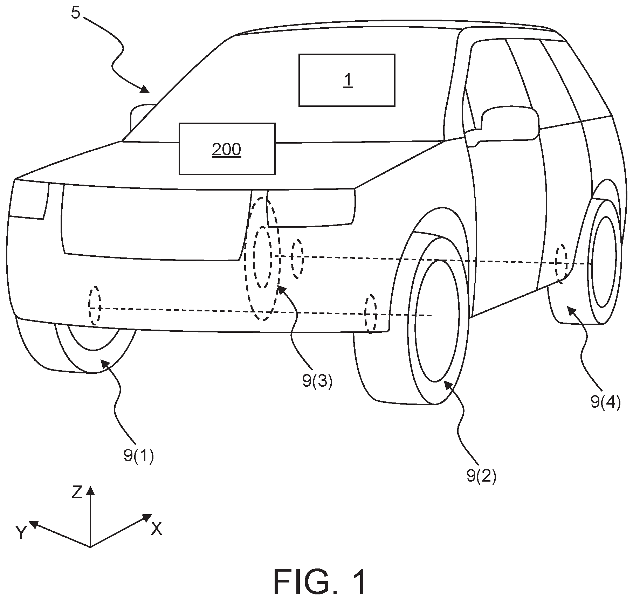

The vehicle 5 is described herein with reference to a reference frame comprising a longitudinal axis X, a transverse axis Y and a vertical axis Z, as shown in Figure 1. The reference signs herein include a suffix in the form of a whole number to differentiate between a plurality of like components on the vehicle 5. The same suffix is applied for components associated with each other, for example components forming part of the same sub-assembly of the vehicle 5. The integer n is used herein to identify a signal or event relating to a corresponding one of a plurality of features of the vehicle 5.

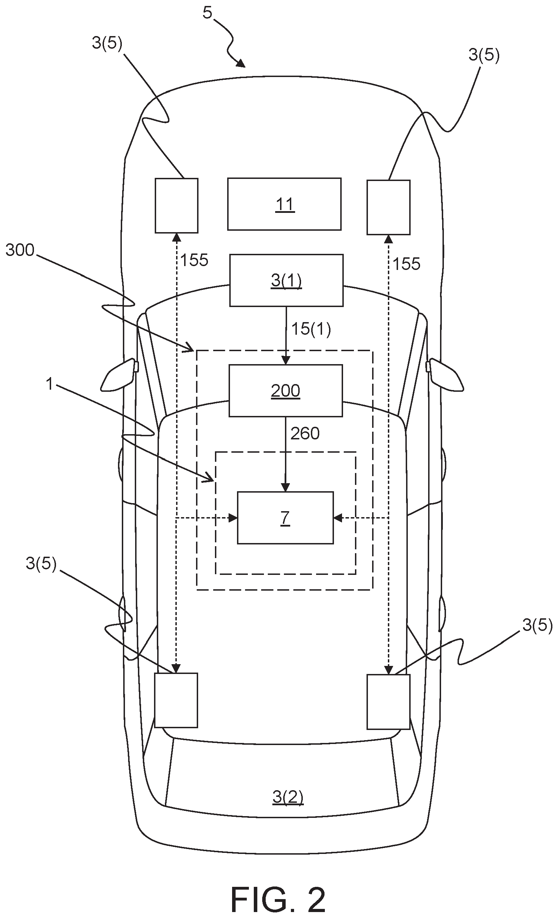

As shown in Figure 1, the control system 1 is installed in a vehicle 5 comprising four (4) wheels 9(1)-9(4). The wheels 9(1)-9(4) comprise first and second front wheels 9(1), 9(2) disposed on a front axle; and first and second rear wheels 9(3), 9(4) disposed on a rear axle. The vehicle 5 is a road vehicle, such as an automobile, a sports utility vehicle (SUV) or a utility vehicle. As shown in Figures 1 and 2, the vehicle 5 in the present embodiment is an automobile. The vehicle 5 comprises one or more torque-generating machine 11, such as an internal combustion engine (ICE) and/or an electric drive unit. The vehicle 5 may be a battery electric vehicle (BEV), a hybrid electric vehicle (HEV), a plug-in hybrid electric vehicle (PHEV) or an internal combustion engine (ICE) vehicle. The front wheels 9(1), 9(2) and/or the rear wheels 9(3), 9(4) may be driven by the one or more torque-generating machine 11. The vehicle 5 is two-wheel drive and only the front wheels 9(1)-9(2) are driven. The torque-generating machine 11 comprises an internal combustion engine 11 for driving the front wheels 9(1), 9(2) of the vehicle 5. Alternatively, or in addition, the internal combustion engine 11 may drive the rear wheels 9(1), 9(2) of the vehicle 5. Alternatively, or in addition, the vehicle 5 may comprise one or more electric drive unit (not shown).

Figures 1 and 2 show the control system 1 for the vehicle 5. The vehicle 5 is suitable for off-road use, that is for use on terrain other than regular tarmac road surfaces. The control system 1 controls one or more of the vehicle subsystems 3(n) including, but not limited to, a propulsion (or engine) system 3(1), a transmission system 3(2), a front wheel steering system 3(3), a brake system 3(4), a suspension system 3(5), a differential system 3(6), a traction control system 3(7), a ride (damping) system 3(8) and a rear wheel steering system 3(9). The vehicle subsystems 3(n) may be controlled independently of each other. Alternatively, two or more of the vehicle subsystems 3(n) may be controlled in combination with each other. The propulsion system 3(1) and the transmission system 3(2) in combination form a powertrain system. Although nine subsystems are illustrated as being under the control of the control system 1, in practice a greater number of vehicle subsystems 3(n) may be included on the vehicle 5 and may be under the control of the control system 1. The vehicle subsystems 3(n) are described herein as having separate control units. It will be understood that the control units of two or more of the plurality of vehicle subsystems 3(n) may be combined, for example in a centralised control unit.

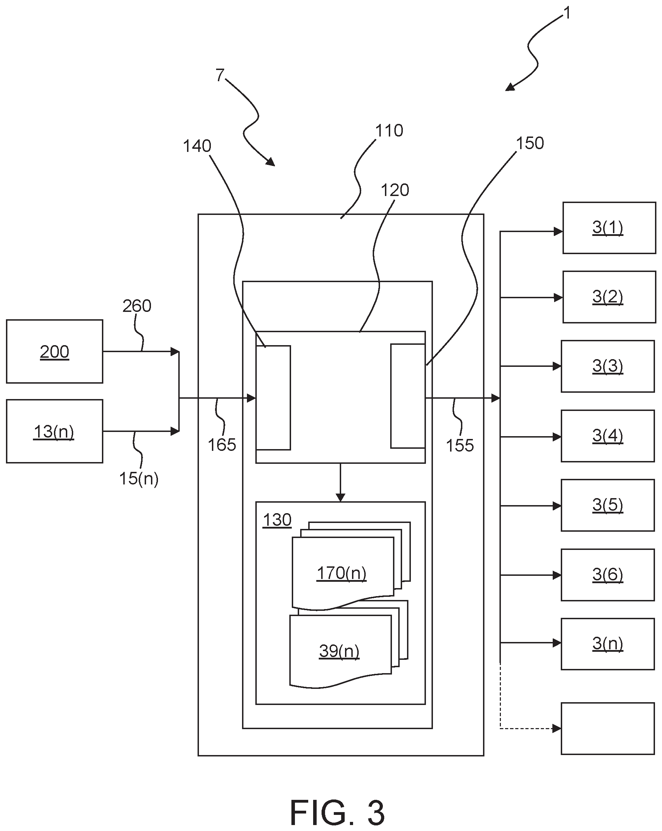

The control system 1 comprises a vehicle control unit 7. The vehicle control unit 7 as illustrated in Figure 3 comprises one controller 110, although it will be appreciated that this is merely illustrative. The controller 110 comprises processing means 120 and memory means 130. The processing means 120 may be one or more electronic processing device 120 which operably executes computer-readable instructions. The memory means 130 may be one or more memory device 130. The memory means 130 is electrically coupled to the processing means 120. The memory means 130 is configured to store instructions, and the processing means 120 is configured to access the memory means 130 and execute the instructions stored thereon. The controller 110 comprises an input means 140 and an output means 150. The input means 140 may comprise an electrical input 140 of the controller 110. The output means 150 may comprise an electrical output 150 of the controller 110.

The vehicle control unit 7 is configured to output control signals 155 to control one or more of the vehicle subsystems 3(n). The control signals 155 configure the subsystems 3(n) in a manner appropriate to the driving conditions for the vehicle 5. The control signals 155 may, for example, configure the vehicle subsystems 3(n) to control the vehicle 5 in dependence on a determination of a terrain type on which the vehicle is operating (referred to as the terrain type). The control signals 155 comprise electrical signals 155 which are output from the electrical output 150.

The vehicle control unit 7 receives a plurality of input signals 160 from one or more vehicle sensor 13(n) provided on the vehicle 5. The input signals 160 are representative of a variety of different parameters associated with vehicle motion and status. The input signals 160 provide, or are used to calculate, a plurality of terrain indicator parameters 165(n) which are indicative of the terrain type on which the vehicle 5 is operating. The vehicle control unit 7 is configured to determine an appropriate control strategy for one or more of the vehicle subsystems 3(n) in dependence on the terrain indicator parameters 165(n). The vehicle control unit 7 in the present embodiment is configured to classify the terrain as being one of the following terrain types: an on-road terrain type and an off-road terrain type. The on-road terrain type comprises or consists of a road surface composed of a durable surface material intended to sustain vehicular traffic. The road surface may be a metalled surface. Alternatively, or in addition, the road surface may be an unmetalled road, such as a gravel road or a dirt road. The metalled surface may, for example, comprise asphalt or concrete laid on a compacted base course. The off-road terrain type does not comprise a road surface. The off-road terrain type comprises unsurfaced terrain. The off-road terrain type may comprise one or more of the following: grass/gravel/snow; mud and ruts; sand; and rocks. The control system 1 in accordance with the present embodiment is configured to differentiate between the on-road terrain type and the off-road terrain type. As described herein, the terrain indicator parameters 165(n) are indicative of whether the vehicle 5 is operating on terrain comprising the on-road terrain type or the off-road terrain type.

The vehicle subsystems 3(n) are controlled in dependence on a selected one of a plurality of subsystem control modes 170(n). Each of the subsystem control modes 170(n) define one or more operating parameter of the vehicle subsystems 3(n). The vehicle subsystems 3(n) are controlled in dependence on the selected subsystem control mode 170(n). A plurality of subsystem control modes 170(n) are predefined. As described herein, each of the plurality of subsystem control modes 170(n) corresponds to one or more terrain type. The subsystem control modes 170(n) configure the vehicle subsystems 3(n). The vehicle control unit 7 is configured to select one of the plurality of subsystem control modes 170(n) in dependence on one or more of the plurality of terrain indicator parameters 165(n). A mode selection probability (weighting) 31(n) is calculated for each of the subsystem control modes 170(n) in dependence on the terrain indicator parameters 165(n). The vehicle control unit 7 selects one of the subsystem control modes 170(n) in dependence on the calculated mode selection probabilities. The mode selection probabilities for the subsystem control modes 170(n) are compared with each other to determine which one of the plurality of subsystem control modes 170(n) is suitable for the current operating conditions.

Each of the plurality of subsystem control modes 170(n) is associated with a corresponding one of the plurality of terrain types. The subsystem control modes 170(n) in the present embodiment a first subsystem control mode 170(1) and a second subsystem control mode 170(2). The first subsystem control mode 170(1) is configured to control the one or more vehicle subsystems 3(n) for operation on the on-road terrain type. The first subsystem control mode 170(1) may be referred to as an on-road subsystem control mode 170(1). The second subsystem control mode 170(2) is configured to control the one or more vehicle subsystems 3(n) for operation on the off-road terrain type. The second subsystem control mode 170(2) may be referred to as an off-road subsystem control mode 170(2). It will be understood that additional subsystem control modes 170(n) may be defined. The first subsystem control mode 170(1) may comprise a general driving mode. The general driving control mode is appropriate for on-road driving and may, for example, configure the suspension to prioritise comfort. The second subsystem control mode 170(2) may comprise one or more of the following: Grass/Gravel/Snow (GGS) control mode; mud and ruts control mode; sand control mode; and rock crawl control mode. The Grass/Gravel/Snow (GGS) control mode may adapt throttle response and configure the transmission to prioritise traction. The mud and ruts control mode may allow increased wheel spin to enable traversal of muddy terrain. The sand control mode may map the throttle response to help maintain momentum through sand. The rock crawl control mode may comprise configuring a throttle map or a torque map of the internal combustion engine 11 for performing rock-crawl manoeuvres. The rock crawl control mode may comprise controlling the transfer case to select a low transmission ratio.

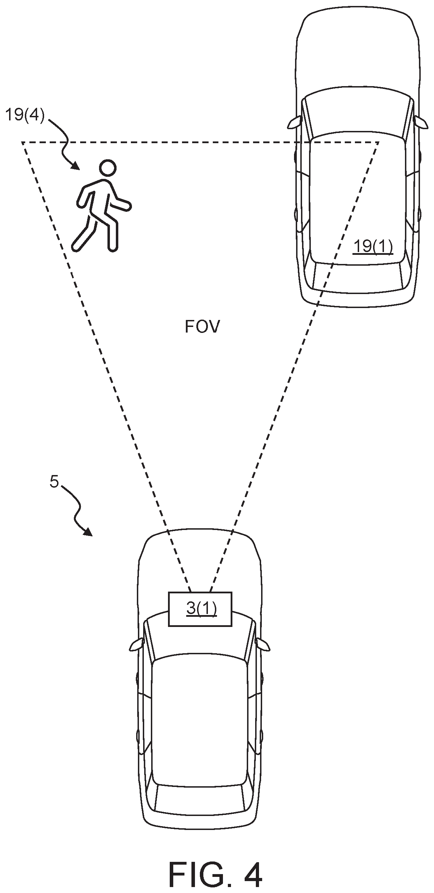

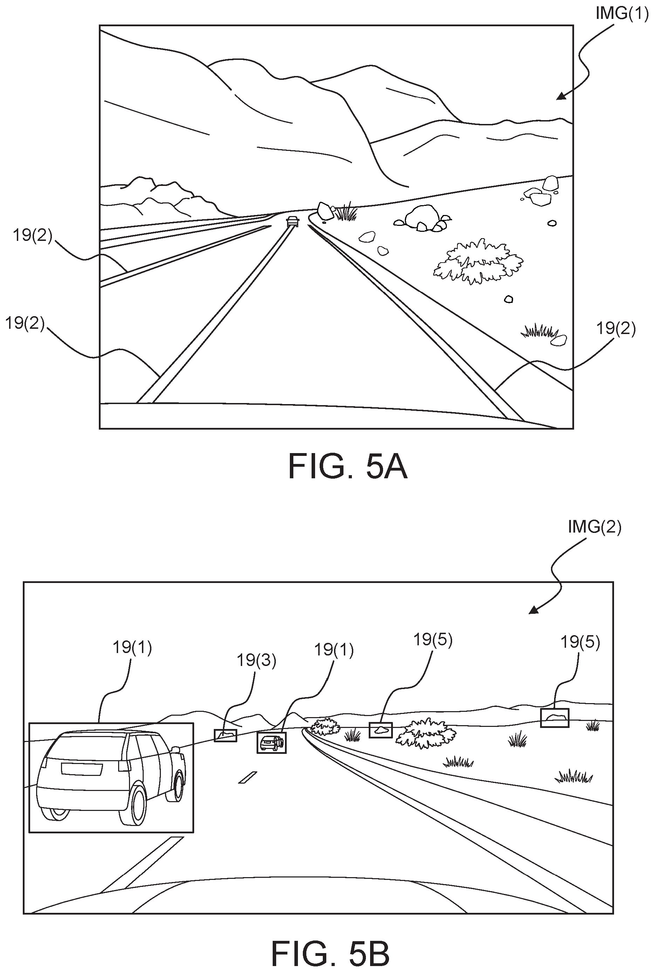

The vehicle 5 comprises a plurality of vehicle sensors 13(n) for measuring external variables. The sensors 13(n) are configured to measure an operating parameter of the vehicle 5 and to output sensor signals 15(n) providing an indication of the measured variable. The sensor signals 15(n) are electrical signals. The sensor signals 15(n) may be supplied to the vehicle control unit 7 as the input signals 160. In the present embodiment, the sensors 13(n) comprise one or more imaging sensor 13(1). By way of example, an imaging sensor 13(1) having a field of view FOV is shown in Figure 4. The or each imaging sensor 13(1) is configured to capture an image IMG(n). The images IMG(n) are updated corresponding to a refresh rate (Hz) of the or each imaging sensor 13(1). First and second images IMG(1), IMG(2) are shown in Figures 5A and 5B by way of example. The or each imaging sensor 13(1) outputs an imaging sensor signal 15(1). The imaging sensor signal 15(1) is an electrical signal which comprises image data IMD representing the image IMG(n) captured by the associated imaging sensor 13(1). The or each imaging sensor 13(1) in the present embodiment is configured to detect electromagnetic radiation. Other types of sensor 13(n) are contemplated. In the present embodiment, the vehicle 5 comprises a plurality of the imaging sensors 13(1). The imaging sensors 13(1) are mounted to the vehicle 5 such that their respective fields of view FOV(n) encompass a region outside the vehicle 5. The imaging sensors 13(1) may, for example, be configured such that the fields of view FOV(n) encompass a region in front of the vehicle 5. Alternatively, or in addition, the imaging sensors 13(1) may be configured such that the fields of view FOV(n) encompass a region to the sides of the vehicle 5 and/or to a rear of the vehicle 5. As described herein, the imaging sensor signals 15(1) are processed to identify one or more object of interest 17 external to the vehicle 5. The imaging sensors 13(1) in the present embodiment comprise optical cameras 13(1) configured to detect electromagnetic radiation in the visible spectrum. The imaging sensors 13(1) output video data in the present embodiment. Alternatively, or in addition, the one or more imaging sensor 13(1) may comprise a laser imaging, detection and ranging (LIDAR) system for capturing the image IMG(n). Alternatively, or in addition, the one or more imaging sensor 13(1) may comprise a radar system.

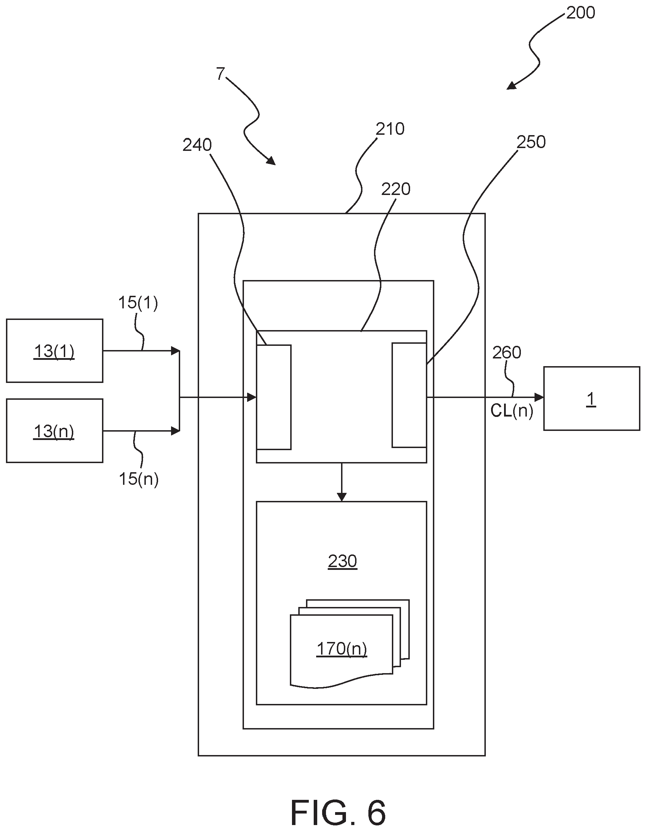

The vehicle 5 comprises an advanced driver assistance system (ADAS) 200. The ADAS 200 is configured to assist a driver of the vehicle 5. The ADAS 200 is configured to receive the imaging sensor signals 15(1) from the imaging sensors 13(1). The ADAS 200 as illustrated in Figure 6 comprises one ADAS controller 110, although it will be appreciated that this is merely illustrative. The ADAS controller 210 is configured to process the image data IMD to identify the one or more object-of interest 17. The ADAS controller 220 in the present embodiment is also configured to classify the one or more object of interest 17. The ADAS controller 210 comprises processing means 220 and memory means 230. The processing means 220 may be one or more electronic processing device 220 which operably executes computer-readable instructions. The memory means 230 may be one or more memory device 230. The memory means 230 is electrically coupled to the processing means 220. The memory means 230 is configured to store instructions, and the processing means 220 is configured to access the memory means 230 and execute the instructions stored thereon. The controller 210 comprises an input means 240 and an output means 250. The input means 240 may comprise an electrical input 240 of the controller 210. The output means 250 may comprise an electrical output 250 of the controller 210. In the present embodiment, the input means 240 is configured to receive the imaging sensor signals 15(1) from the imaging sensors 13(1). The processing means 220 is configured to process the image data IMD to identify the one or more object of interest 17. The processing means 220 may utilise image processing techniques to identify the one or more object-of interest 17. The processing means 220 is configured to classify the or each object-of interest 17. A classification label CL(n) is applied to the or each object of interest 17 to indicate the determined class of the object of interest 17. The output means 250 is configured to output a driver assistance signal 260 which provides an indication of the number and/or the class of the or each object of interest 17 identified by the processing means 220. The driver assistance signal 260 is an electrical signal and is supplied to the control system 1 according to the present embodiment. As described herein, the driver assistance signal 260 is a terrain indicator parameter 165 in the present embodiment. The control system 1 uses the driver assistance signal 260 to determine the mode selection probabilities 31(n).

The processing means 220 is configured to classify the one or more object of interest 17 as belonging to one or more class 19(n). In the present embodiment, the one or more object of interest 17 is classified as one or more of the following classes 19(n): (a) a road vehicle class 19(1); (b) a lane marking class 19(2); (c) a road sign (or road furniture) class 19(3); (d) a pedestrian class 19(4); and (e) a building class 19(5). This list is not exhaustive and other classes 19(n) may be defined. Furthermore, the classes 19(n) may include one or more sub-classes. The road vehicle class 19(1) may include one or more sub-classes to define a vehicle type, for example one or more of the following: a truck (or lorry), an articulated vehicle, a motorcycle, a bicycle. The or each class 19(n) is defined by one or more attribute. The processing means 220 is configured to classify the or each object of interest 17 in dependence on identification of the one or more attributes. A classification label is applied to each object of interest 17 identified in the image IMG(n), The classification label indicates the determined class of each object of interest 17. In the present embodiment, the driver assistance signal 260 includes a classification label associated with each object of interest 17. The one or more attribute may, for example, comprise one or more of the following:
(i) an aspect ratio of the object of interest 17, for example defining a relationship between two or more of the height, width and length of the object of interest 17;
(ii) a trajectory of the object of interest 17;
(iii) a velocity of the object of interest 17;
(iv) a shape (or profile) of the object of interest 17, for example assessed by a shape matching algorithm;
(v) an image identification system to identify an image stored in an image database, for example to identify a street sign; and
(vi) a colour of the object of interest 17.

The trajectory and/or the velocity of the object of interest 17 may be determined relative to the vehicle 5. Other techniques may be used to identify and/or to classify the one or more object of interest 17. The processing means 220 is configured to generate the driver assistance signal 260 which is output by the output means 250. The driver assistance signal 260 in the present embodiment indicates detection of the or each object of interest 17. The driver assistance signal 260 also comprises the classification label indicating the determined class 19(n) of the or each object of interest 17.

The control system 1 receives the driver assistance signal 260 from the ADAS system 200. The control system 1 uses the driver assistance signal 260 as a terrain indicator parameter 165 to determine the mode selection probabilities 31(n). The control system 1 monitors detection of the or each object of interest 17. The control system 1 in the present embodiment is configured to perform rolling window analysis to quantify detection of the objects of interest 17. The driver assistance signal 260 may represent the detection of the one or more object of interest 17 as time-series data. The detection of the one or more object of interest 17 may be represented with respect to time. Alternatively, the driver assistance signal 260 may represent the detection of the one or more object of interest 17 as distance-series data. The detection of the one or more object of interest 17 may be represented with respect to a distance travelled by the vehicle 5. The control system 1 may determine an object detection parameter 35(n) for the or each object of interest 17. The object detection parameter 35(n) may, for example, comprise a detection rate of the or each object of interest. The detection rate may represent how many of the objects of interest 17 are detected during a rolling interval. The rolling interval may represent a time interval. The object detection parameter 35(n) may indicate a quantity of the objects of interest 17 detected during the time interval. The time interval may be predefined, for example as 5 seconds, 10 seconds, 30 seconds, 60 seconds or longer. Alternatively, the rolling interval may represent a distance interval. The object detection parameter 35(n) may indicate a quantity of the objects of interest 17 detected as the vehicle 5 travelled the distance interval. The distance interval may be predefined, for example as 100 metres, 250 metres, 500 meters, 1,000 metres or longer. The rolling interval shifts forwards so that the object detection parameter provides an indication of the current object detection parameter of the objects of interest 17. Other techniques may be used to determine the object detection parameter 35(n) of the objects of interest 17. For example, the object detection parameter 35(n) may comprise a moving (rolling) average of the detection of the objects of interest 17. The moving average provides an indication of the frequency at which the objects of interest 17 were detected during the rolling window. In the present embodiment, the object detection parameter 35(n) comprises the moving average for objects of interest 17 in the vehicle class 19(1). The rolling interval may be a time interval or a distance interval.

A cumulative object detection parameter 35(n) may be calculated for all of the objects of interest 17 detected by the ADAS 200. The object detection parameter 35(n) may be calculated in dependence on the total number of objects of interest detected by the ADAS 200. In the present embodiment, a separate object detection parameter 35(n) is determined for each class 19(n) of the objects of interest 17. An object detection parameter 35(n) is calculated for each class 19(n). The object detection parameters 35(n) according to the present embodiment are as follows:
(i) A first object detection parameter 35(1) is calculated for each object of interest 17 identified as being in the road vehicle class 19(1).
(ii) A second object detection parameter 35(2) is calculated for each object of interest 17 identified as being in the lane marking class 19(2).
(iii) A third object detection parameter 35(3) is calculated for each object of interest 17 identified as being in the road sign class19(3).
(iv) A fourth object detection parameter 35(4) is calculated for each object of interest 17 identified as being in the pedestrian class 19(4).
(v) A fifth object detection parameter 35(5) is calculated for each object of interest 17 identified as being in the building class 19(5).

It will be understood that one or more of the object detection parameters 35(n) may be omitted. Alternatively, or in addition, different object detection parameters 35(n) may be defined.

The control system 1 is configured to calculate a mode selection probability 31(n) for each of the subsystem control modes 170(n). The control system 1 calculates a first mode selection probability 31(1) for selection of the first subsystem control mode 170(1); and a second mode selection probability 31(2) for selection of the second subsystem control mode 170(2). The first and second mode selection probabilities 31(1), 31(2) each comprise at least one probability component 37(n). The or each probability component 37(n) represents a sub-set of the mode selection probabilities 31(n). In the present embodiment, the at least one probability component 37(n) is calculated in dependence a respective one of the object detection parameters 35(n) calculated for each of the objects of interest 17. Other terrain parameter indicators 165 may be used to calculate the mode selection probabilities 31(n). For example, the mode selection probabilities 31(n) may be calculated in dependence on one or more of the following terrain parameter indicators 165: a surface roughness; a rolling resistance; a vehicle speed.

The probability components 37(n) are determined in dependence on the plurality of probability maps 39(n). The plurality of probability maps 39(n) are different from each other and may, for example, apply different weightings to account for variations in the relative significance of different objects of interest 17 in determining whether the terrain type comprises on-road terrain or off-road terrain. The probability maps 39(n) in the present embodiment are predefined and stored in the memory device 130. Each of the plurality of probability maps 39(n) corresponds to a respective one of the plurality of classes 19(n). The probability maps 39(n) are selected in dependence on the class 19(n) of the or each object of interest 17 detected in the image data IMD. The selected probability map 39(n) is traversed in dependence on the determined object detection parameter 35(n) of the corresponding object of interest 17. In the present embodiment, the selected probability map 39(n) is traversed in dependence on a magnitude of the determined object detection parameter 35(n). Alternatively, or in addition, the selected probability map 39(n) may define the probability component 37(n) in dependence on a rate of change of the object detection parameter 35(n) of the corresponding object of interest 17.

The plurality of probability maps 39(n) are defined to represent the likelihood of the vehicle 5 being on an on-road terrain type or an off-road terrain type. The characteristics of the probability maps 39(n) are summarised below.

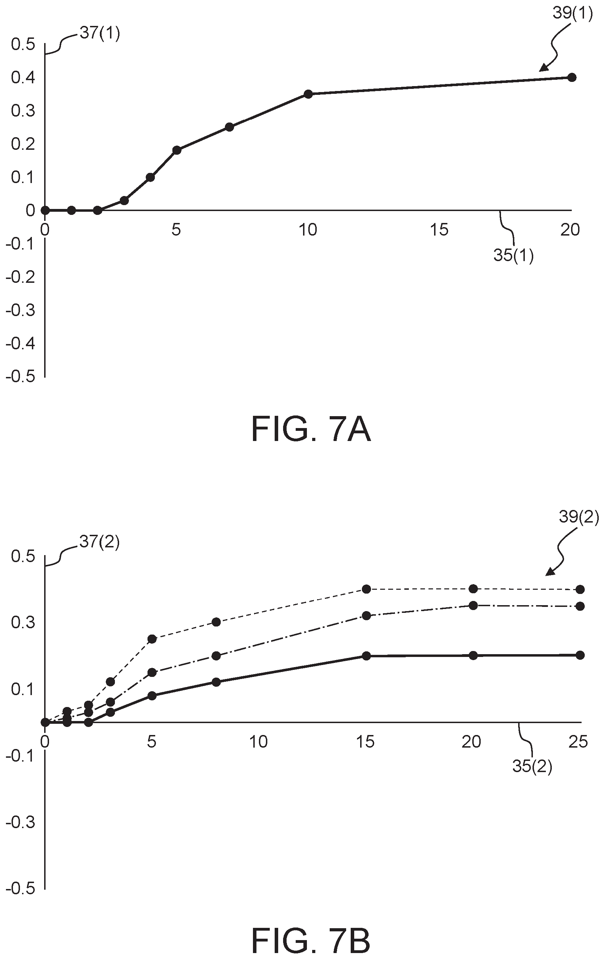

A first probability map 39(1) is defined for the or each object of interest 17 identified as being in the road vehicle class 19(1). An example of the first probability map 39(1) is shown in Figure 7A. The first probability map 39(1) defines a first probability component 37(1). The first probability map 39(1) defines a relationship between the first probability component 37(1) and the object detection parameter 35(1) determined for objects of interest 17 in the road vehicle class 19(1). The object detection parameter 35(1) in this case is a moving average of the number of vehicles. A low number of vehicles has little effect on the first probability component 37(1). A rapid increase in the number of vehicles prompts an increase in the first probability component 37(1). This may help to reduce or exclude some error states. The first probability component 37(1) may be modified in dependence on a direction of travel of the other vehicles relative to the host vehicle 5. For example, the first probability component 37(1) may be increased in dependence on a determination that the detected vehicles are travelling in the opposite direction. Alternatively, the first probability component 37(1) may be decreased in dependence on a determination that the detected vehicles are travelling in the opposite direction. The weighting applied to the first probability component 37(1) in dependence on a direction of travel is calibratable. The first probability component 37(1) increases in direct proportion to the first object detection parameter 35(1). The first probability component 37(1) increases as the object detection parameter 35(1) for objects of interest 17 in the road vehicle class 19(1) increases. A larger value of the object detection parameter 35(1) for objects of interest 17 in the road vehicle class 19(1) promotes selection of the first subsystem control mode 170(1) to configure the one or more vehicle subsystems 3(n) for operation on an on-road terrain type. Conversely, the first probability component 37(1) decreases as the object detection parameter 35(1) for objects of interest 17 in the road vehicle class 19(2) decreases. A smaller value of the object detection parameter 35(1) for objects of interest 17 in the road vehicle class 19(1) promotes selection of the second subsystem control mode 170(2) to configure the one or more vehicle subsystems 3(n) for operation on an off-road terrain type.

A second probability map 39(2) is defined for the or each object of interest 17 identified as being in the lane marking class 19(2). An example of the second probability map 39(2) is shown in Figure 7B. The second probability map 39(2) defines a second probability component 37(2). The second probability map 39(2) defines a relationship between the second probability component 37(2) and the object detection parameter 35(2) determined for objects of interest 17 in the lane marking class 19(2). The object detection parameter 35(2) in this case is a detection rate of the lane markings. The second probability component 37(2) increases in direct proportion to the second object detection parameter 35(2). The second probability component 37(2) may also be related to a length of the or each lane marking. The second probability component 37(2) increases as the object detection parameter 35(2) for objects of interest 17 in the lane marking class 19(2) increases. A larger value of the object detection parameter 35(2) for objects of interest 17 in the lane marking class 19(2) promotes selection of the first subsystem control mode 170(1) to configure the one or more vehicle subsystems 3(n) for operation on an on-road terrain type. Conversely, the second probability component 37(2) decreases as the object detection parameter 35(2) for objects of interest 17 in the lane marking class 19(2) decreases. A smaller value of the object detection parameter 35(2) for objects of interest 17 in the lane marking class 19(2) promotes selection of the second subsystem control mode 170(2) to configure the one or more vehicle subsystems 3(n) for operation on an off-road terrain type. As illustrated in Figure 7B, a plurality of probability maps 39(2) may be defined for different types of lane markings. For example, the lane markings may comprise one or more of the following a single line, a double line, a continuous line, a broken (dashed) line, a central lane marking and a lane edge marking. Different probability maps 39(2) may be defined for the different lane markings.

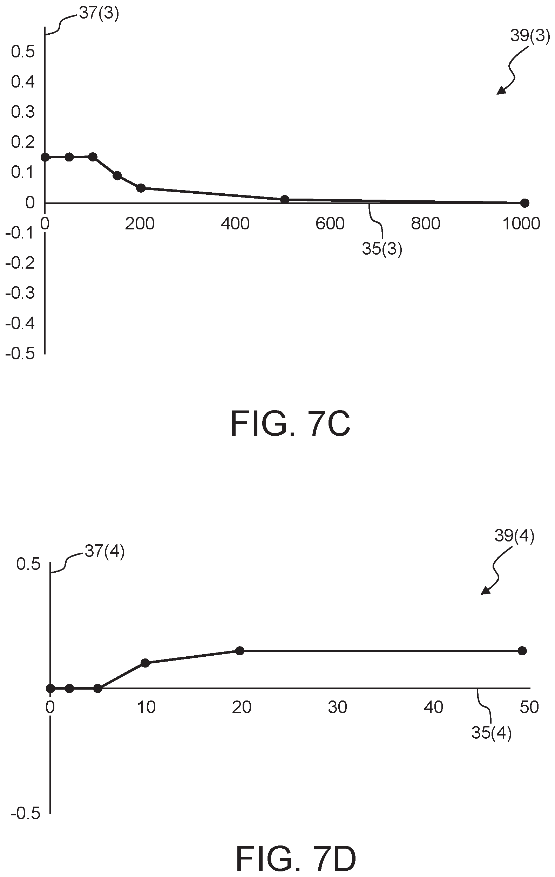

A third probability map 39(3) is defined for the or each object of interest 17 identified as being in the road sign class 19(3). An example of the third probability map 39(3) is shown in Figure 7C. The third probability map 39(3) defines a third probability component 37(3). The third probability map 39(3) defines a relationship between the third probability component 37(3) and the object detection parameter 35(3) determined for objects of interest 17 in the road sign class 19(3). The object detection parameter 35(3) in this case is a distance travelled since detection of the most recent road sign. A larger value of the object detection parameter 35(3) represents a greater distance travelled since detection of the most recent road sign. The second probability component 37(3) is inversely proportional to the third object detection parameter 35(3). The third probability component 37(3) decreases as the object detection parameter 35(3) for objects of interest 17 in the road sign class 19(3) increases. A larger value of the object detection parameter 35(3) for objects of interest 17 in the road sign class 19(3) promotes selection of the second subsystem control mode 170(2) to configure the one or more vehicle subsystems 3(n) for operation on an off-road terrain type. Conversely, the third probability component 37(3) increases as the object detection parameter 35(3) for objects of interest 17 in the road sign class 19(3) decreases. A smaller value of the object detection parameter 35(3) for objects of interest 17 in the road sign class 19(3) promotes selection of the first subsystem control mode 170(2) to configure the one or more vehicle subsystems 3(n) for operation on an on-road terrain type.

A fourth probability map 39(4) is defined for the or each object of interest 17 identified as being in the pedestrian class 19(4). An example of the fourth probability map 39(4) is shown in Figure 7D. The fourth probability map 39(4) defines a fourth probability component 37(4). The fourth probability map 39(4) defines a relationship between the fourth probability component 37(4) and the object detection parameter 35(4) determined for objects of interest 17 in the pedestrian class 19(4). The object detection parameter 35(4) in this case is a detection rate of the pedestrians. The fourth probability component 37(4) increases in direct proportion to the fourth object detection parameter 35(4). The fourth probability component 37(4) increases as the object detection parameter 35(4) for objects of interest 17 in the pedestrian class 19(4) increases. A larger value of the object detection parameter 35(4) for objects of interest 17 in the pedestrian class 19(4) promotes selection of the first subsystem control mode 170(1) to configure the one or more vehicle subsystems 3(n) for operation on an on-road terrain type. Conversely, the fourth probability component 37(4) decreases as the object detection parameter 35(4) for objects of interest 17 in the pedestrian class 19(4) decreases. A smaller value of the object detection parameter 35(4) for objects of interest 17 in the pedestrian class 19(4) promotes selection of the second subsystem control mode 170(2) to configure the one or more vehicle subsystems 3(n) for operation on an off-road terrain type.

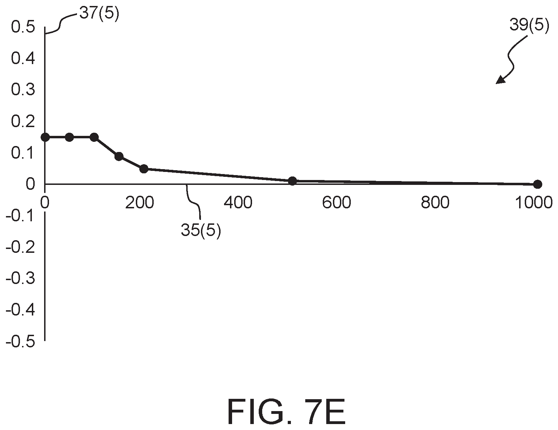

A fifth probability map 39(5) is defined for the or each object of interest 17 identified as being in the building class 19(5). An example of the fifth probability map 39(5) is shown in Figure 7E. The fifth probability map 39(4) defines a fifth probability component 37(5). The fifth probability map 39(5) defines a relationship between the fifth probability component 37(5) and the object detection parameter 35(5) determined for objects of interest 17 in the building class 19(5). The object detection parameter 35(5) in this case is a distance travelled since detection of the most recent building. A larger value of the object detection parameter 35(5) represents a greater distance travelled since detection of the most recent building. The fifth probability component 37(5) is inversely proportional to the fifth object detection parameter 35(5). The fifth probability component 37(5) decreases as the object detection parameter 35(5) for objects of interest 17 in the building class 19(5) increases. A smaller value of the object detection parameter 35(5) for objects of interest 17 in the building class 19(5) promotes selection of the first subsystem control mode 170(1) to configure the one or more vehicle subsystems 3(n) for operation on an on-road terrain type. Conversely, the fifth probability component 37(5) increases as the object detection parameter 35(5) for objects of interest 17 in the building class 19(5) decreases. A larger value of the object detection parameter 35(5) for objects of interest 17 in the building class 19(5) promotes selection of the second subsystem control mode 170(2) to configure the one or more vehicle subsystems 3(n) for operation on an off-road terrain type.

The probability components 37(n) are determined in respect of one or more object of interest 17 detected in the image data IMD. A probability component 37(n) is calculated for each class 19(n) of the objects of interest 17. The first and second mode selection probabilities 31(1), 31(2) are calculated in dependence on the plurality of probability components 37(n). For example, the first and second mode selection probabilities 31(1), 31(2) may be calculated by summing or averaging the plurality of probability components 37(n). By way of example, a first probability map 39(1) is defined for an object of interest 17 identified as being in the road vehicle class 19(1). The first probability map 39(1) is selected in dependence on detection of one or more object of interest 17 in the road vehicle class 19(1). A first probability component 37(1) is determined by traversing the first probability map 39(1) in dependence on the first object detection parameter 35(1) calculated for objects of interest 17 in the road vehicle class 19(1) detected in the image data IMD. The process is performed in respect of the objects of interest 17 in one or more of the other classes 19(n). For example, a second probability component 37(2) may be calculated for each object of interest 17 in the lane marking class 19(2). The first mode selection probability 31(1) is calculated by summing the first probability component 37(1) and the second probability component 37(2). The first subsystem control mode 170(1) is selected in dependence on the first mode selection probability 31(1).

The vehicle control unit 7 selects one of the first and second subsystem control modes 170(1), 170(2) in dependence on the calculated first and second mode selection probabilities 31(1), 31(2). The first and second mode selection probabilities 31(1), 31(2) are compared with each other to determine which one of the first and second subsystem control modes 170(n) is suitable for the current operating conditions. The vehicle control unit 7 may, for example, integrate the mode selection probability 31(n) of each of the subsystem control modes 170(n). The integration may determine a positive difference between the calculated mode selection probability 31(n) of the current selected subsystem control mode 170(n) and the calculated mode selection probability 31(n) of each of the other subsystem control modes 170(n). The vehicle control unit 7 may change the selected subsystem control mode 170(n) when the integration value exceeds a predetermined threshold, or the current subsystem control mode selection probability 31(n) is equal to zero or below a predetermined threshold. The vehicle subsystems 3(n) are controlled in dependence on the selected one of the first and second subsystem control modes 170(1), 170(2).

The operation of the control system 1 will now be described by way of example. The vehicle 5 is operating on off-road terrain. The second subsystem control mode 170(2) is selected to configure the vehicle subsystems 3(n) for operation on the off-road terrain. The vehicle 5 returns to on-road terrain. The control system 1 monitors the driver assistance signal 260 from the ADAS 200. The first and second mode selection probabilities 31(1), 31(2) are calculated in dependence on the probability components 37(1). The control system 1 determines that the first mode selection probability 31(1) is greater than the second mode selection probability 31(2) and request a change to the first subsystem control mode 170(1). The one or more vehicle subsystem 3(n) is controlled in dependence on the first subsystem control mode 170(1). The suspension system 3(5) in the present embodiment has an adjustable ride height. The suspension system 3(5) may, for example, comprise inflatable bladders for adjusting the ride height. The suspension system 3(5) may be controlled to adjust a ride height of the vehicle 5, for example to return to a default ride height for on on-road terrain. The ride height of the suspension system 3(5) is typically lower in the first subsystem control mode 170(1) than the second subsystem control mode 170(2).

Accordingly, the ride height may be lowered when the first subsystem control mode 170(1) is engaged. The second subsystem control mode 170(2) may subsequently be selected in dependence on a determination that the vehicle 5 is operating off-road.

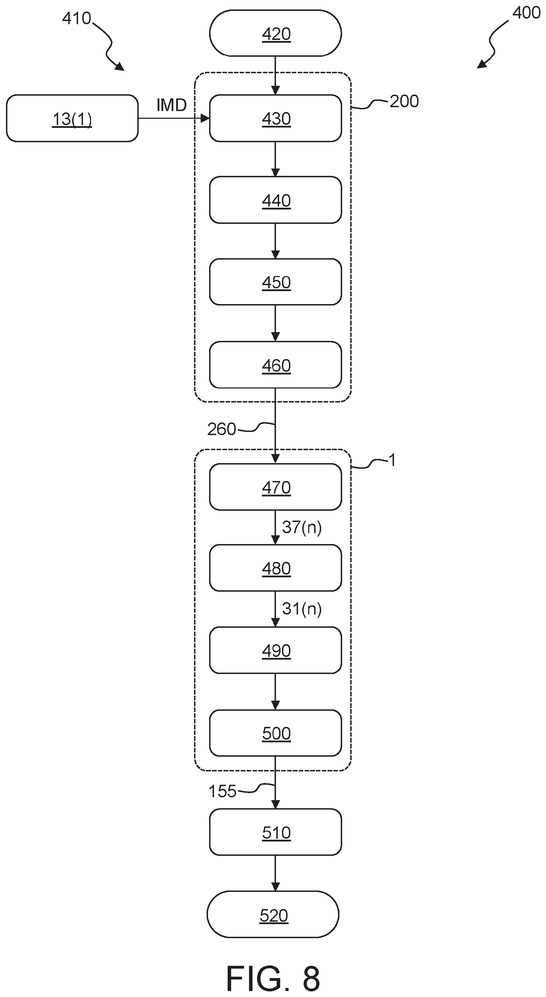

The method 400 for controlling operation of the at least one vehicle subsystem 3(n) will now be described with reference to a block diagram 410 shown in Figure 8. The vehicle 5 is operating (BLOCK 420). The ADAS 200 receivers the image data IMD from the one or more imaging sensors 13(1) (BLOCK 430). The ADAS 200 processes the image data IMD to identify one or more object of interest 17 (BLOCK 440). The ADAS 200 classifies the or each object of interest 17 (BLOCK 450). The ADAS 200 outputs the driver assistance signal 260 identifying the or each object of interest 17 and providing the classification label (BLOCK 460). The method comprises determining probability components 37(n) associated with each class 19(n) of the identified objects of interest 17 (BLOCK 470). First and second mode selection probabilities 31(1), 31(2) are calculated in dependence on the calculated probability components 37(n) (BLOCK 480). One of the first and second subsystem control modes 170(1), 170(2) is selected in dependence on the first and second mode selection probabilities 31(1), 31(2) (BLOCK 490). The control signal 155 is output to configure the subsystems 3(n) according to the selected one of the first and second subsystem control modes 170(1), 170(2) (BLOCK 500). The at least one vehicle subsystem 3(n) is controlled in dependence on the selected one of the first and second subsystem control modes 170(1), 170(2) (BLOCK 510). The first and second mode selection probabilities 31(1), 31(2) str updated as the image data IMD is refreshed. At least in certain embodiments, the first and second mode selection probabilities 31(1), 31(2) may be updated at least substantially in real-time. The method 40 comprises continuing to monitor the driver assistance signal 260 while the vehicle is operational. The method 400 ends when the vehicle 5 is deactivated (BLOCK 520).

It will be appreciated that various changes and modifications can be made to the present invention without departing from the scope of the present application. The control system 1 in accordance with the present embodiment has been described as being separate from the ADAS 200. It will be understood that the control system1 and the ADAS 200 may be combined. For example, the control system 1 may be integrated into the ADAS 200. Alternatively, the control system 1 may be modified to incorporate an image processing system for detecting and/or classifying objects of interest 17 in the one or more image IMG(n) captured by the imaging sensor 13(1).

The control system 1 has been described herein ith reference to an imaging sensor 13(1) having a field of view FOV encompassing a region in front of the vehicle 5. It will be appreciated that more than one imaging sensor 13(1) may be provided. The imaging sensors 13(1) may be arranged such that the fields of view FOV encompass regions to the side and/or rear of the vehicle 5. The detection of objects of interest 17 in these regions may facilitate assessment of the environment. This may facilitate selection of the appropriate subsystem control mode 170(n) for the current operating conditions.

## Claims

1. A control system for selecting one of a plurality of subsystem control modes for a vehicle, each of the plurality of subsystem control modes controlling at least one vehicle subsystem, wherein the plurality of subsystem control modes comprise a first subsystem control mode for configuring the at least one vehicle subsystem for operation on-road and a second subsystem control mode for configuring the at least one vehicle subsystem for operation off-road; the control system comprising one or more processor collectively configured to:
receive a driver assistance signal from a driver assistance system, the driver assistance signal indicating detection of one or more object of interest external to the vehicle;
determine a first mode selection probability in dependence on the detection of the one or more object of interest, the first mode selection probability indicating a likelihood that the vehicle is operating on-road;
select one of the first and second subsystem control modes, in dependence on the first mode selection probability.

2. A control system as claimed in claim 1, wherein the one or more processor is collectively configured to:
determine a second mode selection probability in dependence on the detection of the one or more object of interest, the second mode selection probability indicating a likelihood that the vehicle is operating off-road; and
select one of the first and second subsystem control modes, in dependence on the first mode selection probability and the second mode selection probability.

3. A control system as claimed in claim 1 or claim 2, wherein at least one of the first mode selection probability and the second mode selection probability is determined in dependence on an object detection parameter associated with the one or more object of interest.

4. A control system as claimed in claim 3, wherein the one or more processor is configured to determine the object detection parameter with respect to a distance travelled by the vehicle.

5. A control system as claimed in any one of the preceding claims, wherein the driver assistance signal comprises at least one classification label indicating a class of the or each detected object of interest, wherein the one or more processor is configured collectively to determine the first and second mode selection probabilities, in dependence on the class of the or each object of interest.

6. A control system as claimed in claim 5, wherein the one or more processor is configured collectively to:
select at least one probability map in dependence on the class of the or each detected object of interest; and
calculate the first mode selection probability in dependence on the at least one selected probability map.

7. A control system as claimed in claim 6 when dependent directly or indirectly on claim 3, wherein the one or more processor is configured collectively to:
traverse the at least one selected probability map in dependence on the object detection parameter of the one or more object of interest.

8. A control system as claimed in claim 6 or claim 7, wherein the one or more processor is configured collectively to:
select a first probability map in dependence on a determination that the one or more object of interest belongs to a first class; and
calculate a first probability component in dependence on the selected first probability map.

9. A control system as claimed in any one of claims 6, 7 or 8, wherein the one or more processor is configured collectively to:
select a second probability map in dependence on a determination that the one or more object of interest belongs to a second class; and
calculate a second probability component in dependence on the selected second probability map.

10. A control system as claimed in claims 8 and 9, wherein the first mode selection probability is determined in dependence on the first and second probability components.

11. A system for controlling operation of a vehicle, the system comprising a control system as claimed in any one of the preceding claims and an advanced driver assistance system for detecting the one or more object of interest.

12. A vehicle comprising a control system as claimed in anyone of claims 1 to 10; or a system as claimed in claim 11.

13. A method of selecting one of a plurality of subsystem control modes for a vehicle, each of the plurality of subsystem control modes controlling at least one vehicle subsystem, wherein the plurality of subsystem control modes comprise a first subsystem control mode for configuring the at least one vehicle subsystem for operation on-road and a second subsystem control mode for configuring the at least one vehicle subsystem for operation off-road; the method comprising:
detecting one or more object of interest external to the vehicle;
determine a first mode selection probability in dependence on the detection of the one or more object of interest, the first mode selection probability indicating a likelihood that the vehicle is operating on-road; and
select one of the first and second subsystem control modes in dependence on the first mode selection probability.

14. A method as claimed in claim 13 comprising determining a second mode selection probability in dependence on the detection of the one or more object of interest, the second mode selection probability indicating a likelihood that the vehicle is operating off-road; and selecting one of the first and second subsystem control modes, in dependence on the first mode selection probability and the second mode selection probability.

15. Computer readable instructions which, when executed by one or more processors, cause the one or more processors to perform the method according to claim 12 or claim 13.
